# FASCICULE DE BREVET EUROPEEN

(11) **EP 2 948 373 B1**
(45) Date de publication et mention de la délivrance du brevet: **03.01.2018**
(21) Numéro de dépôt: 14704608.0
(22) Date de dépôt: 20.01.2014
(51) Int. Cl.: B64D 29/06, B64D 33/04

(54) **ENSEMBLE PROPULSIF D'UN AERONEF COMPRENANT UN JOINT A BROSSE RESISTANT AUX HAUTES TEMPERATURES**
ANTRIEBSEINHEIT EINES LUFTFAHRZEUGS MIT EINER HOCHTEMPERATURBÜRSTENDICHTUNG
AIRCRAFT PROPULSION UNIT COMPRISING A HIGH TEMPERATURE RESISTANT BRUSH SEAL

(30) Priorité: 22.01.2013 FR 1350551
(43) Date de publication de la demande: 02.12.2015
(73) Titulaire: Airbus Operations S.A.S., 31060 Toulouse (FR); Airbus SAS, 31700 Blagnac (FR)
(72) Inventeur: AUDART-NOEL, Virginie, 32600 Pujaudran (FR); LETAY, Benoit, 31620 Bouloc (FR); DUSSOL, Loïc, 31100 Toulouse (FR); GALINIER, Michael, 31700 Blagnac (FR); VIALLET, Nicolas, 31820 Pibrac (FR); CAZEAUX, Laurent, 31200 Toulouse (FR); VIGNOBOUL, Benjamin, 82170 Grisolles (FR)
(74) Mandataire: Fantin, Laurent
(86) Numéro de dépôt international: PCT/FR2014/050104
(87) Numéro de publication internationale: WO 2014/114868

(56) Documents cités:
- EP-A2- 0 835 805
- EP-A2- 2 543 864
- US-A- 5 400 586
- US-A- 5 906 097
- US-B1- 6 357 672

## Description

La présente invention se rapporte à un ensemble propulsif d'un aéronef intégrant au moins un joint à brosse résistant aux hautes températures. Selon une application, le joint de l'invention peut être disposé entre un carénage aérodynamique arrière inférieur d'un mât et un moteur supporté par ledit mât.

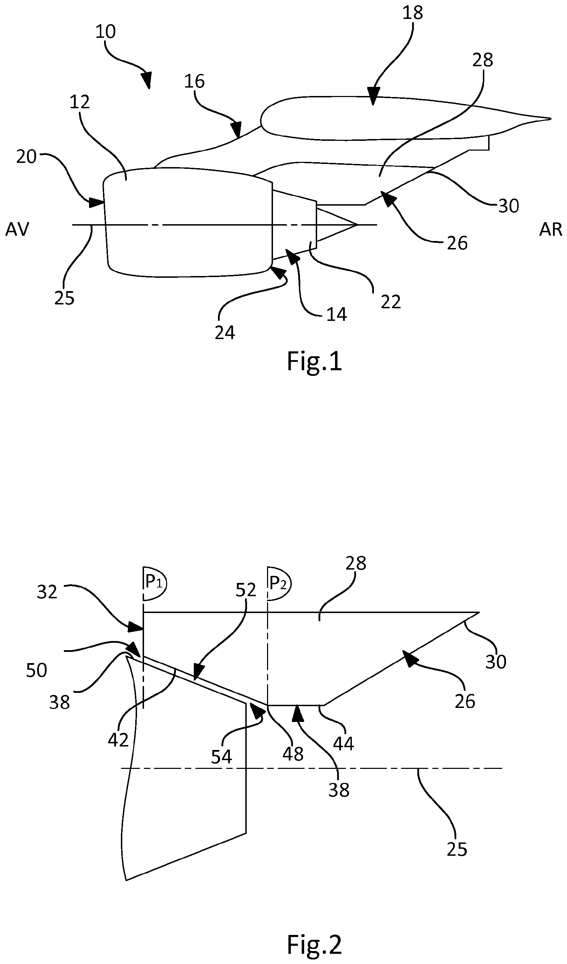

Comme illustré sur la figure 1, un moteur d'aéronef 10 comprend une nacelle 12 dans laquelle est disposée de manière sensiblement concentrique une motorisation 14. Il est relié par l'intermédiaire d'un mât 16 à une voilure 18 d'un aéronef.

La nacelle 12 comprend à l'avant une entrée d'air 20, une première partie du flux d'air entrant, appelée flux primaire, traversant la motorisation 14 pour participer à la combustion pour être éjecté à l'arrière via une tuyère 22, la seconde partie du flux d'air, appelée flux secondaire, étant entrainée par une soufflante et s'écoulant dans un conduit annulaire délimité par la paroi intérieure de la nacelle et la paroi extérieure de la motorisation pour être éjecté à l'arrière via une sortie annulaire 24.

Pour la suite de la description, la direction longitudinale correspond à l'axe de rotation de la motorisation référencé 25 sur la figure 1. L'avant et l'arrière de la nacelle sont définis en fonction du flux d'air traversant la nacelle en phase de vol et sont référencés respectivement AV et AR sur la figure 1.

Le mât 16 permet entre autre de transmettre les efforts de poussée du moteur au reste de l'aéronef et d'assurer le passage des réseaux (carburant, électrique, hydraulique et air) entre le moteur et l'aéronef.

Ce mât 16 comprend une enveloppe extérieure avec des formes aérodynamiques lui permettant de ne pas trop impacter la traînée de l'aéronef. Cette enveloppe comprend un carénage aérodynamique arrière inférieur appelé par la suite APF 26 (« Aft Pylon Fairing » en anglais). Cet APF 26 a essentiellement deux fonctions :
- La première fonction consiste à former une barrière thermique ou anti-feu pour protéger le reste du mât 16 et la voilure 18 qui sont réalisés en des matériaux (par exemple en matériau composite) ne supportant pas des températures élevées comme celles des gaz chauds sortant de la tuyère 22.
- La deuxième fonction consiste à former une continuité aérodynamique entre les sorties 22 et 24 du moteur et le mât.

Comme illustré sur les figures 1 et 2, l'APF est disposé dans le prolongement de la sortie annulaire 24 du moteur.

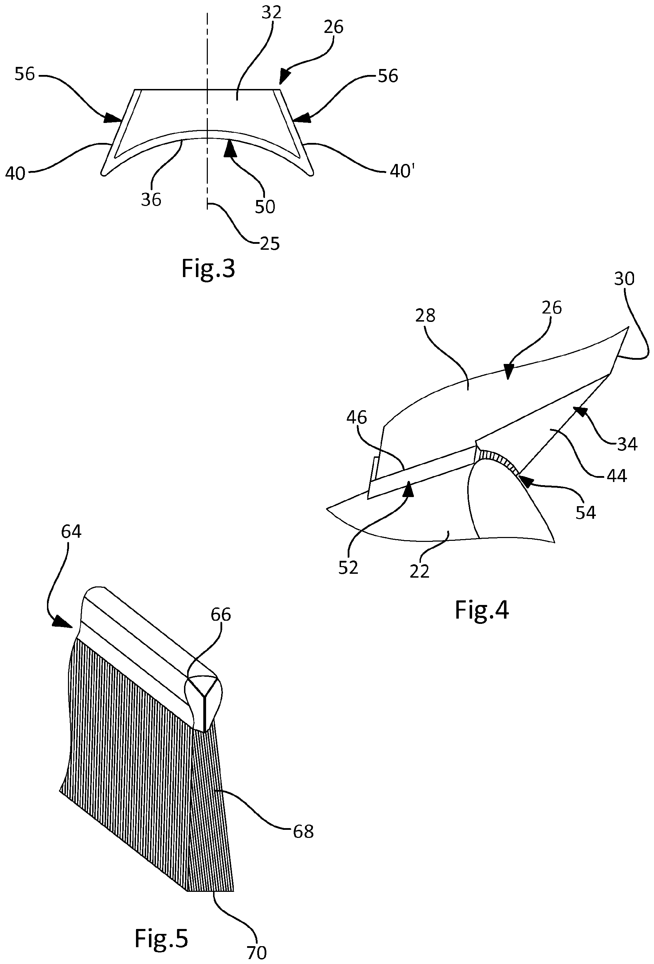

Il comprend une structure (non représentée) supportant deux parois latérales 28 qui se rejoignent à l'arrière au niveau d'une arête 30 qui forme un bord de fuite, un panneau avant 32 (visible sur la figure 3) et un plancher 34 (visible notamment sur la figure 4).

Le panneau avant 32 est disposé dans un plan P1 approximativement perpendiculaire à la direction longitudinale 25. Il comprend un bord inférieur 36 avec un rayon de courbure adapté à celui de la surface extérieure 38 de la tuyère de manière à être faiblement espacé de ladite surface extérieure 38 sur toute sa longueur. Le panneau avant 32 comprend deux bords latéraux 40, 40' qui s'étendent à partir de chaque extrémité du bord inférieur 36. Ces bords latéraux 40, 40' sont disposés en vis-à-vis de parties de la nacelle, et plus particulièrement de parties mobiles (au sol) de la nacelle comme des capots inverseurs de poussée (non représentés).

Le plancher 34 comprend une partie avant 42 en forme d'une portion tronconique parallèle à la surface extérieure 38 de la tuyère 22 et faiblement espacée de cette dernière, et une partie arrière 44 qui prolonge la sortie de la tuyère et relie les bords inférieurs des parois latérales 28.

La partie avant 42 comprend un bord avant disposé juste à l'arrière du panneau avant 32, deux bords latéraux parallèles aux bords inférieurs 46 des parois latérales 28.

La partie avant 42 et la partie arrière 44 sont réalisées d'un seul tenant et sont séparées par une arête 48 disposée dans un plan P2 approximativement perpendiculaire à la direction longitudinale 25.

En raison des normes de certification, notamment celles relatives aux zones « feu », une barrière doit être prévue en périphérie de la partie avant 42 du plancher 34.

Cette barrière comprend un joint avant 50 au niveau du bord inférieur 36 du panneau avant 32 qui assure essentiellement la fonction anti-feu, un joint latéral 52 au niveau du bord inférieur 46 de chaque paroi latérale 28 qui limite la circulation d'air et un joint arrière 54 au niveau de l'arête 48 du plancher qui limite les risques de recirculation des gaz sortant de la tuyère entre l'APF et la tuyère. Selon un mode de réalisation, les bords latéraux 40, 40' du panneau avant 32 supportent chacun un joint 56.

Selon un mode de réalisation, le joint avant 50 est en élastomère de silicone. Il se présente sous la forme d'un boudin. Avantageusement, les joints 50 et 56 ne forment qu'un seul joint, le joint 50 se prolongeant au niveau des bords latéraux 40, 40'.

En variante, le joint avant 50 comprend un joint à lames métalliques disposées bord à bord sur la longueur du joint avant 50, également appelé « turkey feathers » en anglais. Dans ce cas, le joint avant 50 comprend une base fixée au bord inférieur 36 du panneau avant, et une pluralité de lames dont une extrémité est solidaire de la base et dont l'autre extrémité recourbée est en contact avec la surface extérieure de la tuyère.

Selon un mode de réalisation, chaque joint latéral 52 se présente sous la forme d'une bande en élastomère dont un bord est relié au bord inférieur 46 de la paroi latérale 28 et dont l'autre bord est en appui contre la surface extérieure 38 de la tuyère.

Selon un mode de réalisation, le joint arrière 54 se présente sous la forme d'un joint à lames métalliques disposées bord à bord également appelé « turkey feathers » en anglais.

Compte tenu de leurs environnements, ces différents joints 50, 52, 54 doivent assurer la fonction de barrière malgré une grande amplitude de mouvements entre l'APF et le moteur et des variations de températures importantes.

Selon une autre contrainte, ils sont soumis à des phénomènes vibratoires. Enfin, les gradients de température de part et d'autre du joint peuvent être importants lorsque le joint est utilisé comme barrière de pression.

Le document EP-835.805 décrit un joint métallique.

Même si les joints utilisés donnent satisfaction sur le plan fonctionnel, certains joints peuvent s'user prématurément. Ainsi, les joints en élastomère peuvent être brûlés dans certaines zones notamment celles proches de la zone chaude du moteur en raison des températures élevées. De plus, les joints avec les lames métalliques peuvent se fissurer ou se casser, notamment au niveau des extrémités recourbées, en raison des frottements avec la tuyère.

Compte tenu de ces risques d'usure, il est nécessaire d'inspecter régulièrement ces joints et de les changer régulièrement.

Les documents US-5.400.586 et US-5.900.097 décrivent des joints à brosse disposés entre deux surfaces d'un ensemble propulsif d'aéronef. Le document US-5.400.586 décrit un seul joint à brosse. Le document US-5.900.097 décrit plusieurs joints à brosse dont les bases sont solidarisées à la même surface.

Dans les deux cas, les joints à brosse comprennent des brins implantés selon une unique direction. Dans certaines circonstances, l'étanchéité procurée n'est pas optimale.

La présente invention vise à remédier aux inconvénients de l'art antérieur.

A cet effet, l'invention a pour objet un ensemble propulsif d'aéronef selon les revendications 1 et 4. Ces types de joint assurent la fonction de barrière même en présence d'une importante amplitude de mouvements entre des pièces d'un ensemble propulsif, tels que l'APF et le moteur. Contrairement aux joints de l'art antérieur, ce genre de joint a une meilleure résistance à l'usure ce qui permet d'augmenter la durée entre deux inspections et entre les changements. Par conséquent, le joint selon l'invention permet de réduire les coûts d'exploitation de l'aéronef.

D'autres caractéristiques et avantages ressortiront de la description qui va suivre de l'invention, description donnée à titre d'exemple uniquement, en regard des dessins annexés sur lesquels :
- La figure 1 est une vue latérale d'un moteur d'aéronef,
- La figure 2 est une représentation schématique de l'extrémité arrière d'une tuyère et d'un APF,
- La figure 3 est une vue avant d'un panneau avant d'un APF selon l'art antérieur,
- La figure 4 est une vue en perspective d'une partie d'un APF selon l'art antérieur,
- La figure 5 est une vue en perspective d'un joint à brosse,
- La figure 6A est une coupe illustrant un joint à brosse installé,
- La figure 6B est une vue en perspective d'un panneau avant d'un APF utilisant un joint selon la variante illustrée à la figure 6A,
- La figure 7A est une coupe illustrant un joint selon une première variante de l'invention,
- La figure 7B est une vue en perspective d'un panneau avant d'un APF utilisant un joint selon la variante illustrée à la figure 7A,
- La figure 8A est une coupe illustrant un joint qui ne fait pas partie de l'invention,
- La figure 8B est une vue en perspective de la partie avant du plancher d'un APF utilisant un joint selon la variante illustrée à la figure 8A,
- La figure 9A est une coupe illustrant un joint selon une deuxième variante de l'invention,
- La figure 9B est une vue en perspective de la partie avant du plancher d'un APF utilisant un joint selon la variante illustrée à la figure 9A,
- La figure 10 est une vue de face d'un joint illustrant un mode d'implantation des brins, et
- La figure 11 est une vue en perspective d'un joint illustrant un autre mode d'implantation des brins.

Sur les vues 6B, 7B, 8B, 9B, on a représenté un carénage aérodynamique arrière inférieur d'un mât ou APF, ledit mât supportant un moteur comprenant une motorisation disposée dans une nacelle. Pour la présente demande, on entend par ensemble propulsif l'ensemble des éléments d'un moteur (motorisation/nacelle) et du mât supportant le moteur.

Les éléments identiques à l'art antérieur sont référencés de la même manière. Ainsi, l'APF 26 comprend une structure (non représentée) supportant deux parois latérales 28, un panneau avant 32 et un plancher 34.

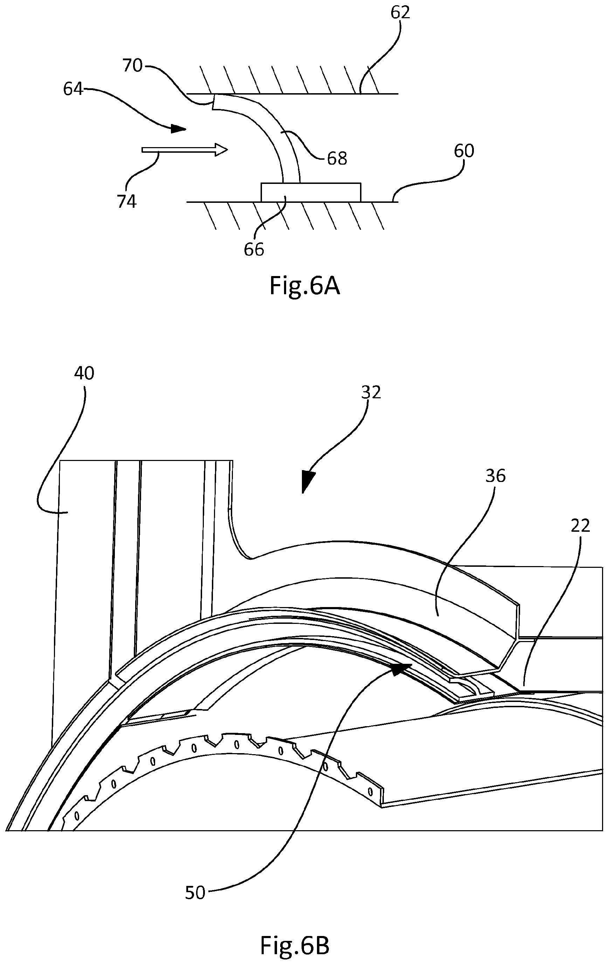

Comme illustré sur la figure 6B, le panneau avant 32 comprend un bord inférieur 36. Un joint avant 50 est intercalé entre le bord inférieur 36 et la tuyère 22.

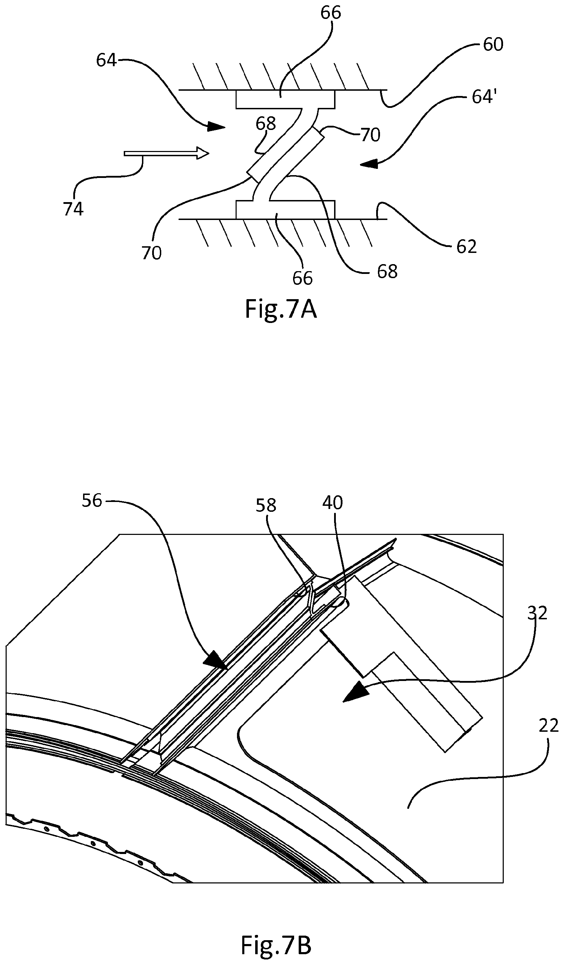

Comme illustré sur la figure 7B, le panneau avant 32 comprend au moins un bord latéral 40. Un joint 56 est intercalé entre le bord latéral 40 et une partie 58 de la nacelle, par exemple une partie mobile au sol comme un capot inverseur de poussée.

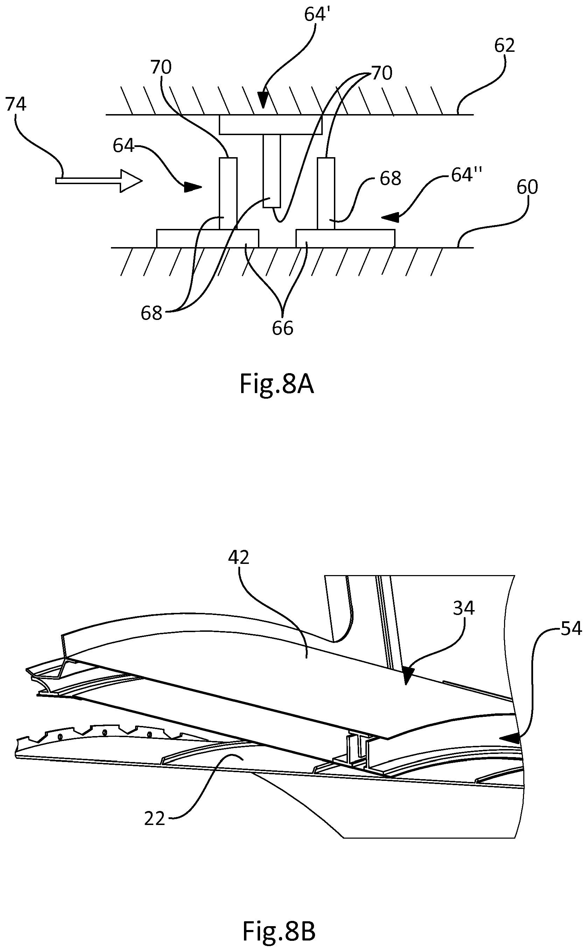

Comme illustré sur la figure 8B, le plancher 34 comprend une partie avant 42 disposée en vis-à-vis d'une surface extérieure 38 de la tuyère 22 du moteur. Un joint arrière 54 est intercalé entre le plancher 34 et la surface extérieure du bord de fuite de la tuyère 22.

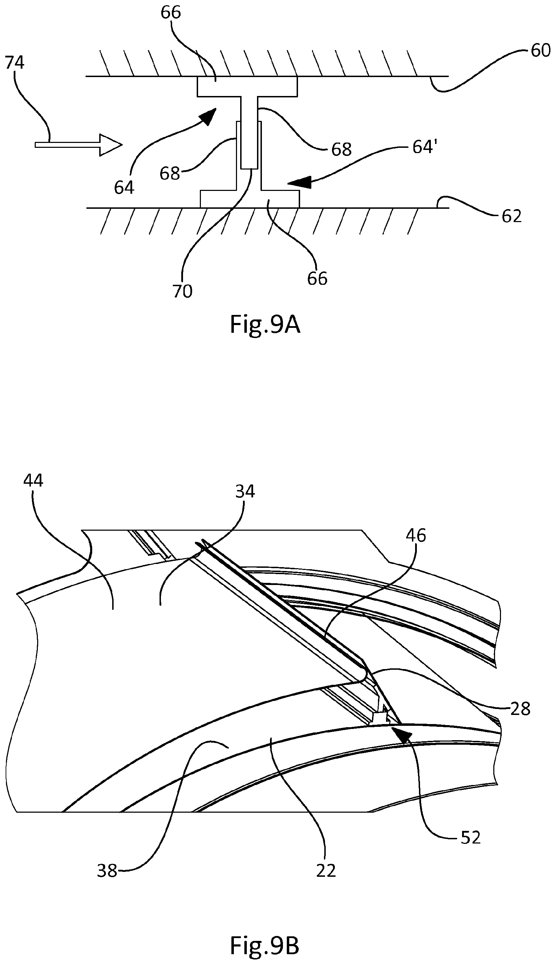

Comme illustré sur la figure 9B, l'APF comprend des parois latérales 28 dont les extrémités inférieures sont faiblement espacées de la surface extérieure de la tuyère 22. Un joint latéral 52 est intercalé entre le bord inférieur 46 de chaque paroi latérale 28.

Quelle que soit sa position, un joint 50 à 56 est intercalé entre une première surface 60 appartenant à l'APF (ou au moteur) et une seconde surface 62 appartenant au moteur (ou à l'APF).

Selon l'invention, un joint comprend plusieurs joints à brosse 64 comprenant une pluralité de brins réalisés en un matériau résistant à la chaleur, comme illustré sur la figure 5.

La plus grande dimension du joint à brosse correspond à sa longueur et la plus petite dimension correspond à sa largeur.

Un joint à brosse 64 comprend une base 66 solidaire d'une des deux surfaces 60 et 62 et une pluralité de brins 68 dont une première extrémité est fixée à la base 66 et dont la seconde extrémité 70 est libre.

Les brins 68 sont des éléments filiformes.

Avantageusement, un joint brosse 64 comprend plusieurs brins sur sa largeur. Cette configuration permet de renforcer la barrière formée par le joint.

De préférence, ces brins 68 sont réalisés à partir d'un alliage métallique à base de nickel ou de cobalt. Cette solution permet d'obtenir une meilleure résistance aux hautes températures.

La base 66 du joint brosse peut être métallique ou en un autre matériau. Selon un mode de réalisation, elle comprend deux ailes parallèles, qui s'étendent selon la longueur du joint et qui enserrent les extrémités des brins. Selon un mode de réalisation, la base 66 est solidarisée à l'une des surfaces 60, 62 par tous moyens appropriés, comme par exemple à l'aide de vis. En variante, la base et la surface à laquelle elle est reliée sont réalisés d'un seul tenant. La base 66 est solidaire d'une première surface 60 et les extrémités 70 libres sont distantes de la seconde surface 62, comme illustré sur la figure 8A.

Selon d'autres variantes, qui ne font pas partie de la présente invention, la base 66 est solidaire d'une première surface 60 et les extrémités 70 libres sont en contact avec la seconde surface 62, comme illustré par exemple sur la figure 6A. Dans ce cas, l'oxydation à chaud des brins permet de réduire les frottements.

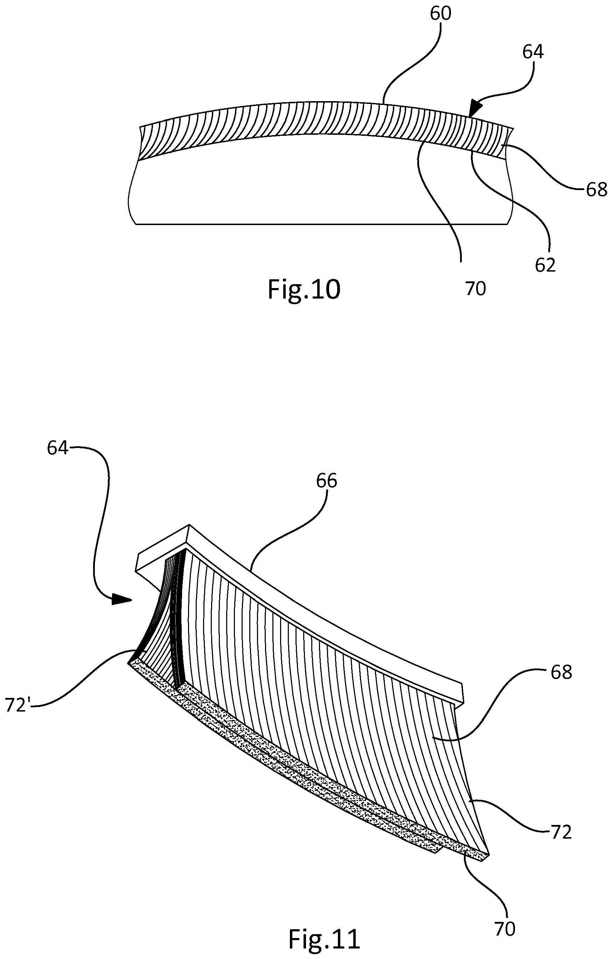

Avantageusement, lorsque les extrémités libres des brins sont en contact avec une surface, les brins 68 ne sont pas orientés perpendiculairement à ladite surface mais sont inclinés, dans un plan contenant la longueur du joint, comme illustré sur la figure 10. Ainsi, lorsque les deux surfaces se rapprochent, les brins sont toujours inclinés dans le même sens. Cette configuration permet d'éviter que les brins s'inclinent en sens opposé lorsque les surfaces se rapprochent et s'écartent en laissant un espace entre eux synonyme de fuite.

Selon une autre variante illustrée en figure 11, qui ne fait pas partie de l'invention, le joint à brosse 64 comprend au moins une couche 72 de brins inclinés selon une première direction dans le sens de la longueur du joint et au moins une couche 72' de brins inclinés selon une seconde direction contraire à la première toujours selon le sens de la longueur du joint. Cette configuration permet d'obtenir une barrière étanche à chaque extrémité.

A titre d'exemple, les brins de la couche 72 sont inclinés d'un angle formant +20° par rapport à la normale alors que les brins de la couche 72' sont inclinés d'un angle formant -20° par rapport à la normale.

Selon la variante illustrée sur la figure 6A, un joint comprend un unique joint à brosse 64. Dans ce cas, les extrémités libres 70 des brins 68 sont en contact avec une des deux surfaces. A cet effet, la hauteur du joint à brosse 64 est supérieure à la distance maximale séparant les deux surfaces 60 et 62.

Comme illustré sur la figure 6A, le joint à brosse 64 forme une barrière sécante à la direction d'un flux 74. Selon un premier agencement illustré sur la figure 6A, les extrémités libres 70 des brins sont orientées en sens opposé par rapport à la direction du flux 74. Dans ce cas, la différence de pression va tendre à plaquer les extrémités libres 70 des brins contre la surface 62 ce qui va améliorer l'étanchéité.

Selon un autre agencement, les extrémités libres 70 des brins sont orientées dans le même sens que la direction du flux 74. Dans ce cas, la barrière formée par le joint à brosse peut assurer la fonction de soupape. Ainsi, en cas de surpression, les brins 68 vont s'incliner pour laisser passer le surplus de pression puis revenir en position initiale.

Cette variante permet d'obtenir une barrière anti-feu, et en fonction de l'orientation des extrémités des brins, une barrière étanche à la pression ou une barrière assurant la fonction de soupape.

Selon une application, cette variante est plus particulièrement adaptée pour former le joint avant 50 de l'APF, comme illustré sur la figure 6B. Dans ce cas, la base du joint à brosse est solidarisée au moteur, et plus particulièrement à la tuyère 22, et les extrémités libres 70 des brins sont en contact avec le plancher de l'APF et sont orientées vers l'avant de la nacelle.

Selon une première variante de l'invention illustrée sur la figure 7A, un joint comprend deux joints à brosse 64 et 64', la base du premier joint 64 étant solidarisée à une première surface 60 et la base du second joint 64' étant solidarisée à la seconde surface 62. De préférence, les premières extrémités des brins 68 d'un premier joint à brosse 64 sont décalées vers l'arrière par rapport aux premières extrémités des brins 68 du second joint à brosse 64' et les brins 68 du premier joint à brosse 64 sont mis à l'avant par rapport aux brins du second joint à brosse 64' de manière à ce que les brins du premier joint à brosse 64 soient plaqués contre les brins du second joint à brosse 64'.

Comme illustré sur la figure 7A, les joints à brosse 64, 64' forment une barrière sécante à la direction d'un flux 74.

Cette variante permet d'obtenir à la fois une barrière anti-feu et étanche à la pression.

Selon une application, cette variante est plus particulièrement adaptée pour former un joint 56 destiné à être intercalé entre un bord latéral du panneau avant d'un APF et une partie de la nacelle comme un capot inverseur de poussée, comme illustré sur la figure 7B.

Selon une autre variante illustrée sur la figure 8A, qui ne fait pas partie de l'invention, le joint comprend trois joints
à brosse 64, 64', 64", décalés selon la direction du flux 74. Selon cette variante, les joints à brosse 64, 64', 64" ont une hauteur inférieure à la distance séparant les surfaces 60 et 62.

Les bases des joints à brosse sont alternativement reliées à l'une ou l'autre des surfaces 60 et 62. Ainsi, le premier joint à brosse 64 est relié à la première surface 60, le deuxième joint à brosse 64' est relié à la seconde surface 62, le troisième joint à brosse 64" est relié à la première surface 60. Cette configuration permet de former un chemin de fuite.

Contrairement aux variantes précédentes, cette variante permet d'obtenir un joint anti-feu mais ne permet pas de former une barrière à la pression.

En alternative, selon cette variante, le joint peut comprendre deux joints à brosse ou plus de trois joints à brosse.

Selon une application, cette variante est plus particulièrement adaptée pour former un joint arrière 54 d'un APF 26, comme illustré sur la figure 8B. Dans ce cas, le premier joint à brosse 64 est solidaire de la tuyère 22, le deuxième joint à brosse 64' est solidaire du plancher 34 de l'APF et le troisième joint à brosse 64" est solidaire de la tuyère 22.

Selon une deuxième variante de l'invention illustrée sur la figure 9A, un joint comprend deux joints à brosse 64 et 64', chacun solidaire d'une des surfaces 60, 62, disposés l'un en face de l'autre, de manière à ce que les extrémités libres 70 des brins d'un des deux joints à brosse s'imbriquent dans les brins de l'autre joint à brosse.

Selon cette variante, la hauteur des deux joints à brosse est inférieure à la distance maximale séparant les deux surfaces 60 et 62, la somme des hauteurs étant toutefois supérieure à la distance minimale entre les deux surfaces 60 et 62. Selon un mode de réalisation, un premier joint 64 est solidaire d'une première surface 60 et les extrémités libres 70 de ses brins 68 s'imbriquent dans les brins 68 du second joint à brosse solidaire de la seconde surface 62.

Cette variante permet d'obtenir à la fois une barrière anti-feu et étanche à la pression.

Selon une application, cette variante est plus particulièrement adaptée pour former un joint latéral 52 de l'APF, comme illustré sur la figure 9B. Dans ce cas, un premier joint à brosse 64 est solidarisé à l'extrémité inférieure d'une paroi latérale 28 de l'APF et un second joint à brosse 64' est solidarisé, en face, sur la tuyère 22.

Quelle que soit la variante, le joint comprend au moins deux couches comprenant chacune une pluralité de brins réalisés en un matériau résistant à la chaleur, les brins d'une première couche étant orientés selon une première orientation et les brins d'une deuxième couche étant orientés selon une deuxième orientation différente de la première orientation.

Selon l'invention, une orientation se caractérise par une direction à savoir la direction de la droite passant par les extrémités de chaque brin et par un sens à savoir la position de l'extrémité du brin reliée à la base par rapport à son extrémité libre.

Selon une variante illustrée sur la figure 11, qui ne fait pas partie de l'invention, un joint à brosse comprend deux couches de brins qui sont reliées à la même base 66. Selon cette variante, les brins des deux couches ont des directions différentes.

Selon d'autres variantes illustrées sur les figures 7A, 7B, 8A, 8B, 9A, 9B, chaque couche est reliée à une base 66 distincte et chacune d'elle forme un joint à brosse distinct. Dans ce cas, le joint comprend plusieurs joints à brosse, chacun d'eux comprenant au moins une couche de brins, au moins deux joints à brosse ayant des couches de brins avec des sens différents.

## Revendications

1. Ensemble propulsif d'aéronef comprenant un mât (16) avec un carénage aérodynamique arrière inférieur (26), un moteur et au moins un joint (50 à 56) intercalé entre une surface (60) dudit carénage aérodynamique arrière inférieur (26) et une surface (62) dudit moteur, le rejoint comprenant plusieurs joints à brosse (64, 64') comportant une pluralité de brins réalisés en un matériau résistant à la chaleur, un premier joint (64) avec une base solidarisée à une des surfaces (60, 62) et un second joint (64') avec une base solidarisée à l'autre des surfaces (60,62), les brins du premier joint à brosse (64) étant plaqués contre les brins du second joint à brosse (64').

2. Ensemble propulsif d'aéronef selon la revendication 1, les joints à brosse (64, 64') étant sécants avec un flux et les brins du joint à brosse (64) en contact avec le flux (74) ayant des extrémités libres (70) orientées en sens opposé par rapport à la direction du flux (74).

3. Ensemble propulsif d'aéronef selon la revendication 2, ledit carénage aérodynamique arrière inférieur (26) comprenant un panneau avant (32) avec au moins un bord latéral (40) faisant face à une partie (58) du moteur, **caractérisé en ce que** la base du premier joint (64) est solidaire de la partie (58) du moteur et la base du second joint (64') est solidaire du bord latéral (40) du panneau avant (32) du carénage aérodynamique arrière inférieur.

4. Ensemble propulsif d'aéronef comprenant un mât (16) avec un carénage aérodynamique arrière inférieur (26), un moteur et au moins un joint (50 à 56) intercalé entre une surface (60) dudit carénage aérodynamique arrière inférieur (26) et une surface (62) dudit moteur, **caractérisé en ce que** le joint comprend plusieurs joints à brosse (64, 64') comportant une pluralité de brins réalisés en un matériau résistant à la chaleur, un premier joint (64) avec une base solidarisée à une des surfaces (60, 62) et un second joint (64') avec une base solidarisée à l'autre des surfaces (60,62) et **en ce que** le joint comprend deux joints à brosse (64, 64'), chacun solidaire d'une des surfaces (60, 62), disposés l'un en face de l'autre, de manière à ce que les brins d'un des deux joints à brosse ont des extrémités libres (70) qui s'imbriquent dans les brins de l'autre joint à brosse.

5. Ensemble propulsif d'aéronef selon la revendication 4, ledit carénage aérodynamique arrière inférieur (26) comprenant des parois latérales (28) avec des extrémités inférieures (46) faiblement espacées d'une surface extérieure d'une tuyère du moteur, **caractérisé en ce que** la base d'un premier joint à brosse est solidaire du bord inférieur (46) d'une paroi latérale (28) et **en ce que** la base du second joint à brosse est solidaire de la surface extérieure de la tuyère.

## Patentansprüche

1. Antriebseinheit eines Luftfahrzeugs, die einen Pylon (16) mit einer hinteren unteren aerodynamischen Verkleidung (26), einen Motor und wenigstens eine Verbindung (50 bis 56) aufweist, die zwischen eine Oberfläche (60) der hinteren unteren aerodynamischen Verkleidung (26) und eine Oberfläche (62) des Motors eingebracht ist, wobei die Verbindung mehrere Bürstendichtungen (64, 64') aufweist, die eine Vielzahl von Borsten umfassen, die aus einem wärmebeständigen Material hergestellt sind, eine erste Verbindung (64) mit einer Basis, die an einer der Oberflächen (60, 62) befestigt ist, und eine zweite Verbindung (64') mit einer Basis, die an der anderen Oberfläche (60, 62) befestigt ist, wobei die Borsten der ersten Bürstenverbindung (64) gegen die Borsten der zweiten Bürstenverbindung (64') angesetzt sind.

2. Antriebseinheit eines Luftfahrzeugs nach Anspruch 1, bei der die Bürstendichtungen (64, 64') einen Fluss schneiden und die Borsten der Bürstenverbindung (64), die in Kontakt mit dem Fluss (74) stehen, freie Enden (70) aufweisen, die der Richtung des Flusses (74) entgegengesetzt ausgerichtet sind.

3. Antriebseinheit eines Luftfahrzeugs nach Anspruch 2, bei der die hintere untere aerodynamische Verkleidung (26) eine vordere Platte (32) mit wenigstens einem seitlichen Rand (40) aufweist, die einem Teil (58) des Motors gegenüberliegt, **dadurch gekennzeichnet, dass** die Basis der ersten Verbindung (64) an dem Teil (58) des Motors befestigt ist und die Basis der zweiten Verbindung (64') an dem seitlichen Rand (40) der vorderen Platte (32) der hinteren unteren aerodynamischen Verkleidung befestigt ist.

4. Antriebseinheit eines Luftfahrzeugs, die einen Pylon (16) mit einer hinteren unteren aerodynamischen Verkleidung (26), einen Motor und wenigstens eine Verbindung (50 bis 56) aufweist, die zwischen einer Oberfläche (60) der hinteren unteren aerodynamischen Verkleidung (26) und einer Oberfläche (62) des Motors eingebracht ist, **dadurch gekennzeichnet, dass** die Verbindung mehrere Bürstendichtungen (64, 64') aufweist, die eine Vielzahl von Borsten umfassen, die aus einem wärmebeständigen Material hergestellt sind, eine erste Verbindung (64) mit einer Basis, die an einer der Oberflächen (60, 62) befestigt ist, und eine zweite Verbindung (64') mit einer Basis, die an der anderen Oberfläche (60, 62) befestigt ist, und dass die Verbindung zwei Bürstenverbindungen (64, 64') aufweist, die jeweils an einer der Oberflächen (60, 62) derart einander gegenüberliegend angebracht sind, dass die Borsten einer der Bürstenverbindungen freie Enden (70) aufweisen, die in die Borsten der anderen Borstenverbindung eingreifen.

5. Antriebseinheit eines Luftfahrzeugs nach Anspruch 4, bei dem die hintere untere aerodynamische Verkleidung (26) Seitenwände (28) mit unteren Enden (46) aufweist, die sich in einem kleinen Abstand zu einer Außenfläche einer Düse des Motors befinden, **dadurch gekennzeichnet, dass** die Basis einer ersten Bürstenverbindung am unteren Rand (46) einer Seitenwand (28) befestigt ist und dass die Basis der zweiten Bürstenverbindung an der Außenfläche der Düse befestigt ist.

## Claims

1. Aircraft propulsion assembly comprising a pylon (16) with a lower rear fairing (26), an engine and at least one seal (50 to 56) interposed between a surface (60) of said lower rear fairing (26) and a surface (62) of said engine, the seal comprising several brush seals (64, 64') comprising a plurality of strands made of a heat-resistant material, a first seal (64) comprising a base secured to one of the surfaces (60, 62) and a second seal (64') comprising a base secured to the other of the surfaces (60, 62), the strands of the first brush seal (64) being pressed against the strands of the second brush seal (64').

2. Aircraft propulsion assembly according to claim 1, **characterized in that** the brush seals (64, 64') are secant to a flow and the strands of the brush seal (64) in contact with the flow (74) comprise free ends (70) oriented in an opposite directional sense with respect to the direction of the flow (74).

3. Aircraft propulsion assembly according to claim 2, said lower rear fairing (26) comprising a front panel (32) with at least one lateral edge (40) facing a part (58) of the engine, **characterized in that** the base of the first seal (64) is secured to the part (58) of the engine and the base of the second seal (64') is secured to the lateral edge (40) of the front panel (52) of the lower rear fairing.

4. Aircraft propulsion assembly comprising a pylon (16) with a lower rear fairing (26), an engine and at least one seal (50 to 56) interposed between a surface (60) of said lower rear fairing (26) and a surface (62) of said engine, **characterized in that** the seal comprises several brush seals (64, 64') comprising a plurality of strands made of a heat-resistant material, a first seal (64) comprising a base secured to one of the surfaces (60, 62) and a second seal (64') comprising a base secured to the other of the surfaces (60, 62) and **in that** the seal comprises two brush seals (64, 64) each one secured to one of the surfaces (60, 62), arranged facing one another so that the strands of one of the two brush seals have free ends (70) which nest between the strands of the other brush seal.

5. Aircraft propulsion assembly according to claim 4, said lower rear fairing (26) comprising lateral walls (28) with lower ends (46) closely spaced with an exterior surface of a jet pipe of the engine, **characterized in that** the base of a first brush seal is secured to the lower edge (46) of a lateral wall (28) and **in that** the base of the second brush seal is secured to the exterior surface of the jet pipe.
